# EUROPEAN PATENT SPECIFICATION

(11) **EP 2 902 681 B1**
(45) Date of publication and mention of the grant of the patent: **31.10.2018**
(21) Application number: 14153064.2
(22) Date of filing: 29.01.2014
(51) Int. Cl.: F16K 31/04

(54) **A modular motor driven actuator**
Modulares motorangetriebenes Stellglied
Actionneur entraîné par moteur modulaire

(43) Date of publication of application: 05.08.2015
(73) Proprietor: Danfoss A/S, 6430 Nordborg (DK)
(72) Inventor: Benedik, Gasper, Selca 4227 (SI); Clausen, Anders Østergaard, 8680 Ry (DK); Andersen, Torben Lund, 8000 Aarhus C (DK); Munch, Lars, 6580 Vamdrup (DK)
(74) Representative: Inspicos P/S

(56) References cited:
- DE-B3-102004 054 888
- GB-A- 2 364 396
- US-A1- 2011 024 657

## Description

### FIELD OF THE INVENTION

The present invention relates to an actuator, more particularly a motor driven actuator. for operating a valve. The actuator of the invention is modular in the sense that it comprises a basis module and an interface arranged to receive at least one additional module providing additional functionality to the actuator.

### BACKGROUND OF THE INVENTION

It is sometimes desirable to provide actuators with certain functionality, such as a safety mechanism which ensures that the actuator is moved to a predefined position, such as an extreme position, in the case of a power failure, various control features, etc. Previously such functionality had to be built directly into the actuator. Thereby, in the case that it is desirable to provide actuators with various functionalities, it is either necessary to manufacture a number of different actuators, or to include all of the desired functionalities into one actuator. In any event, this will increase the manufacturing costs, and only leave little room for flexibility or possibility of customizing the actuator to meet various requirements. An actuator for controlling a valve according to the preamble of claim 1 is disclosed in GB 2 364 396 A.

### DESCRIPTION OF THE INVENTION

It is an object of embodiments of the invention to provide an actuator, which can be provided with desired functionality, without increasing the manufacturing costs.

It is a further object of embodiments of the invention to provide an actuator which is customizable to meet various requirements.

The invention provides an actuator, the actuator comprising:
- a basis module comprising a motor arranged to drive an actuating part of the actuator, and
- an interface, formed on the basis module, said interface being arranged to receive at least one additional module, selected among one or more kinds of additional modules, where each additional module is arranged to cooperate with the basis module to provide additional functionality to the actuator, where different kinds of additional modules provide different functionality,
   wherein an actuator having an additional module of a given kind mounted at the interface is capable of performing the functionality provided by additional modules of this kind, wherein an additional module of one kind, mounted at the interface, can be exchanged by an additional module of another kind, thereby changing the additional functionality provided to the actuator, and wherein one of the additional modules is an energy storage module , which provides an emergency energy storage for the actuator, said emergency energy storage allowing the actuating part to be moved into a predefined position in the case of a power interruption.

In the present context the term 'actuator' should be interpreted to means a device which is capable of actuating a component, such as a valve.

The actuator of the invention comprises a basis module. The basis module comprises a motor which is arranged to drive an actuating part of the actuator. The actuating part may also be comprised in the basis module. In the present context the term 'actuating part' should be interpreted to mean a part of the actuator which performs the actual actuation. For instance, the actuating part may be a movable rod, which is arranged to cause movement of one or more parts of the component being actuated. The motor is arranged to drive the actuating part, i.e. when the motor is operated, it causes the actuating part to perform the actual actuation. Thus, the basis module includes all the basic features which are necessary in order to allow the actuator to operate. Furthermore, the basis module defines the interface between the actuator and the component being actuated by the actuator, via the actuating part.

The actuator further comprises an interface, formed on the basis module. The interface is arranged to receive at least one additional module, which is selected among one or more kinds of additional modules. Each additional module is arranged to cooperate with the basis module to provide additional functionality to the actuator. Different kinds of additional modules provide different functionality. Thus, an actuator having an additional module of a given kind mounted at the interface is capable of performing the functionality provided by additional modules of this kind.

Thus, the actuator of the invention can be provided with a specific functionality, simply by mounting an additional module, which provides this functionality, at the interface.

Since the basic functionality of the actuator is included in the basic module, the actuator is operational without an additional module being mounted at the interface. Accordingly, the actuator can be provided with just the basis module, or with the basis module and one or more additional modules mounted at the interface, the one or more additional modules being selected in such a manner that it/they provide functionality to the actuator, which is required in the context where the actuator is to be used.

Thus, according to the invention, an actuator is provided which can be customized to meet the exact requirements of the context in which the actuator is to be used, i.e. required functionality is provided, but additional functionality, which is not required, is not provided. This allows the manufacturing costs of a given actuator to be kept at a minimum. Furthermore, a large number of different actuators with various functionality is provided with only a limited number of different parts, which can be combined to provide actuators with a desired combination of functionality. This even further lowers the manufacturing costs.

The motor may be an electrical motor, such as a step motor. As an alternative, the motor may be of any other suitable kind, such as a DC motor.

The basis module may further comprise a gear arrangement for transferring movements of the motor into movements of the actuating part. According to this embodiment, the motor and the actuating part are interconnected via the gear arrangement, and the gear arrangement ensures that movements of the motor are transferred into appropriate movements of the actuating part.

The gear arrangement may be arranged to transfer a rotational movement of the motor into a translational movement of the actuating part. According to this embodiment, the gear arrangement is of a kind which is capable of transferring rotational movements into translational movement, e.g. a rack and pinion. Alternatively or additionally, the gear system may define a gear ratio, which increases or decreases a rotational speed defined by the motor.

As an alternative to the gear arrangement, the motor and the actuating part may be interconnected in another suitable manner. For instance, the motor may be provided with a threaded bore, and the actuating part may comprise or be connected to a threaded rod arranged in the threaded bore of the motor. When the motor rotates, the threaded rod will thereby perform a translational movement.

According to the invention, one of the additional modules is an energy storage module, which provides an emergency energy storage for the actuator, said emergency energy storage allowing the actuating part to be moved into a predefined position in the case of a power interruption.

In the case that a power interruption occurs, it will no longer be possible to operate the motor. Thus, it is no longer possible to operate the actuating part, and thereby the actuator. In some applications this is not acceptable, and it is therefore important to provide an emergency mechanism, which ensures that the actuating part is automatically moved to a predefined position, which defines a 'safe mode' for the component being operated by means of the actuator, in the case of a power interruption. In order to allow this, the energy storage module stores energy, e.g. automatically during normal operation, and the stored energy is subsequently used for moving the actuating part into the predefined position in the case of a power interruption.

The predefined position could, e.g., be an end position of the actuating part, defining an extreme setting of the component being actuated by means of the actuator. In the case that the component being actuated is a valve, such an extreme setting could, e.g., be the valve being fully open or fully closed. As an alternative, the predefined position could, e.g., be maintaining the present position of the actuating part, or it could be any other suitable, user defined position.

The energy storage module may comprise a rechargeable battery or battery pack. According to this embodiment the energy stored in the energy storage module is in the form of electrical energy. The battery or battery pack is preferable charged during normal operation of the actuator. When a power interruption occurs, the battery or battery pack is connected to the motor, and electrical power is supplied to the motor by the battery or battery pack. Thereby the motor is kept operational, at least sufficiently long to allow it to move the actuating part into the predefined position.

As an alternative, the energy storage module may comprise mechanical biasing means, such as a wind up spring, a compressible spring, or a resilient member. According to this embodiment, the energy stored in the energy storage module is in the form of mechanical energy. The mechanical energy may be stored in the mechanical biasing means, e.g. during operation or initially, e.g. manually, such as by manually tensioning a spring. During normal operation, the mechanical biasing means is maintained in the position where the energy is stored. In the case of a power interruption, the stored mechanical energy is released, and the released mechanical energy is used for moving the actuating part to the predefined position.

One of the additional modules may be a control module, which is capable of providing a connection to one or more further components being external with respect to the actuator, and the functionality added to the actuator by the control module may be to enable the actuator to control said one or more further components. According to this embodiment, the actuator can be used for controlling further components, apart from the component which the actuator is arranged to actuate.

In some cases it is required or desirable that two or more components are controlled in a coordinated manner. In such cases it is an advantage that all of the involved components are controlled by means of a single actuator, since the coordinated control of the components can thereby easily be ensured. Furthermore, since the actuator is capable of controlling the one or more further components due to the connection between the control module and the one or more further components, the further components do not need to be positioned immediately next to the actuator in order to allow the actuator to control the one or more further components. Instead the further components can be arranged at a position which is suitable with regard to the function each component is performing.

Allowing the actuator to control one or more further components may further reduce a processing load on a central control unit, which is arranged to perform the overall control of several units comprising an actuator, an actuated component and one or more further components being controlled by the actuator. In this case the central controller only needs to communicate with each of the actuators, and to provide overall control instructions to the actuators. In turn, the actuators provide detailed control signals for itself and for each of the further components.

The control module may comprise control electronics required for performing at least part of the control of the one or more further components. According to this embodiment, at least part of the control of the one or more further components is performed directly by means of the control electronics arranged in the control module. The control of the one or more further components may be performed completely by the control module. Alternatively, the control of the one or more further components may be performed partly by the control module and partly by the basis module. As another alternative, the control of the one or more further components may be performed completely by the basis module. In this case the control module only provides the connection between control electronics arranged in the basis module and the one or more further components.

At least one of the one or more further components may be a valve, such as a three way valve.

One of the additional modules may be a sensor connection module, which is capable of feeding an output signal of one or more sensors to the actuator. According to this embodiment, one or more sensors may be arranged at or near the component being actuated by means of the actuator, e.g. in order to measure parameters which are relevant with respect to the control of the component being actuated by means of the actuator. Thereby the sensor connection module allows measurements from such sensors to be supplied to the actuator, and the actuator can thereby control the component being actuated in accordance with the sensor signals.

The sensors may, e.g., be temperature sensors, pressure sensors, humidity sensors, CO₂ sensors, and/or any other suitable kind of sensors.

In the case that the actuator is arranged for controlling a valve of a heating system, the sensor connection module may feed signals from two temperature sensors, where one of the temperature sensors is arranged to measure the temperature of inlet fluid and the other temperature sensor is arranged to measure the temperature of outlet fluid. Based on the sensor signals from these two temperature sensors, the actuator is capable of calculating the energy flow through the valve, in the case that the valve is of a kind where the fluid flow through the valve is independent of the differential pressure across the valve. This is, e.g., advantageous in building management systems.

The sensor connection module may further be adapted to communicate sensor signals and/or processed sensor signals to a central control unit. For instance, the sensor connection module may communicate the sensor signals to the central control unit, and the central control unit may perform appropriate processing of the sensor signals. Alternatively or additionally, the sensor connection module may communicate processed sensor signals, such as a calculated energy flow through a valve, to the central control unit. The central control unit may, in this case, use the processed sensor signals for further purposes, such as billing purposes or statistical purposes.

The sensor signals and/or the processed sensor signals may be communicated via a wired connection or via a wireless connection.

As an alternative to feeding the sensor signals to the actuator via a sensor connection module mounted at the interface of the basis module, the sensor signals may be fed to the actuator via a separate connection, for instance via connectors formed on the basis module and connected directly to the relevant sensors.

One of the additional modules may be a cable connector module, which comprises cable connectors for connecting the actuator directly to a power supply, and/or cable connectors allowing the actuator to be interconnected with one or more further components. According to this embodiment, the actuator can be arranged in electrical connection with a power supply and/or one or more further components, via the cable connector module. In the case that the cable connector module comprises cable connectors for connecting the actuator directly to a power supply, the cable connector module is capable of supplying additional electrical power to the actuator. In the case that the cable connector module comprises cable connectors allowing the actuator to be interconnected with one or more further components, the actuator may be arranged in a chain of components. In the case that the cable connector module comprises cable connectors for connecting the actuator directly to a power supply, as well as cable connectors allowing the actuator to be interconnected with one or more further components, the actuator may be able to ensure sufficient power supply to at least some of the further components.

Providing such cable connectors via an additional module allows the basis module and the additional module to be separated without interrupting the connection between the actuator and the power supply and/or the one or more further components. This allows the basis module to be replaced or repaired, without affecting the operation of the other components. This is in particular an advantage in large systems with many interconnected components.

At least one of the one or more further components may be another actuator, e.g. an actuator according to the invention. In this case, a number of substantially identical units, each comprising an actuator, may be interconnected to form a common system, e.g. a heating and/or cooling system in a building.

At least one of the one or more further components may be a central control unit. According to this embodiment the actuator can communicate with the central control unit, e.g. in order to receive control signals. The central control unit may further be able to communicate with one or more further components, e.g. components which are also connected to the actuator, via the cable connector module. In this case the communication between the central control unit and the further components, via the cable connector module of the actuator, is not interrupted in the case that the basis module of the actuator is removed, as described above. This is a great advantage.

It should be noted that in the present context the term 'central control unit' should be interpreted to mean a control unit which is arranged to communicate with a number of components. The central control unit may be a main control unit, e.g. of a building. However, the central control unit could also be arranged to control a subset of components in a building, such as components arranged on the same floor, and to communicate with a main control unit of the building, which is in turn arranged to communicate with a number of central control units.

The interconnection to one or more further components may be provided by means of a bus connection, such as a bus based on a RS485 bus connection. As an alternative, the interconnection may be in the form of simple analogue cables.

The cable connector module may allow the actuator to boost a power signal by means of the cable connectors for connecting the actuator directly to a power supply. In the case that a large number of actuators are interconnected, e.g. via a Daisy chain, the resistance in the power cables increases to an unacceptable level. Therefore there is an upper limit to the number of actuators which can form part of such a system. However, by boosting the power signal in the Daisy chain by means of a cable connector module as described above, the number of actuators connected to the Daisy chain can be increased.

One of the additional modules may be a conduit connector module, comprising a cable inlet, where a rotational orientation of the cable inlet, relative to the basis module, can be adjusted to match a position of an in-going cable. Thereby the actuator can be positioned in any suitable manner, without considering where and how the in-going cable is arranged. The conduit connector module can then simply be rotated to the position which matches the position of the in-going cable. This increases the flexibility of the actuator.

According to the invention the actuator is arranged for controlling a valve. According to one embodiment, the valve may form part of a heating and/or cooling system in a building. The actuator may be connected directly to the controlled valve, e.g. via a valve interface formed on the basis module. Thereby the basis module is the part of the actuator which is directly connected to the component being actuated.

The basis module may further comprise electronics for controlling the actuator. As an alternative, such electronics may be arranged exterior to the actuator. As another alternative, the actuator may be controlled by means of electrical circuits and/or switches. According to one embodiment, at least one additional module may be selected among two or more kinds of additional modules, and an additional module of one kind, mounted at the interface, can be exchanged by an additional module of another kind, thereby changing the additional functionality provided to the actuator. According to this embodiment, a very flexible actuator is provided, in which the functionality of the actuator can be changed, even after the actuator has been installed, simply by exchanging an additional module with another kind of additional module, and/or by adding a further additional module.

### BRIEF DESCRIPTION OF THE DRAWINGS

The invention will now be described in further detail with reference to the accompanying drawings in which
Fig. 1 is a perspective view of a basis module for an actuator according to an embodiment of the invention,
Fig. 2 is a cross sectional view of the basis module of Fig. 1,
Fig. 3 is a cross sectional and perspective view of the basis module of Figs. 1 and 2,
Figs. 4 and 5 are perspective views of an actuator according to a first embodiment of the invention,
Fig. 6 is a diagram of a cooling and heating system comprising a valve being actuated by means of an actuator according to a second embodiment of the invention,
Fig. 7 illustrates the actuator according to the second embodiment of the invention,
Fig. 8 is a diagrammatic view of a system comprising a valve being actuated by means of an actuator according to a third embodiment of the invention,
Figs. 9 is a diagrammatic view of a system comprising a valve being actuated by means of an actuator according to a fourth embodiment of the invention,
Fig. 10 illustrates the actuator according to the fourth embodiment of the invention,
Fig. 11 is a diagrammatic view of a system comprising a valve being actuated by means of an actuator according to a fifth embodiment of the invention,
Fig. 12 illustrates the actuator according to the fifth embodiment of the invention,
Fig. 13 is a diagrammatic view of a system comprising three valves, each being actuated by means of an actuator according to a sixth embodiment of the invention,
Fig. 14 illustrates the actuator according to the sixth embodiment of the invention, and
Figs. 15 and 16 are perspective views of an actuator according to a seventh embodiment of the invention.

### DETAILED DESCRIPTION OF THE DRAWINGS

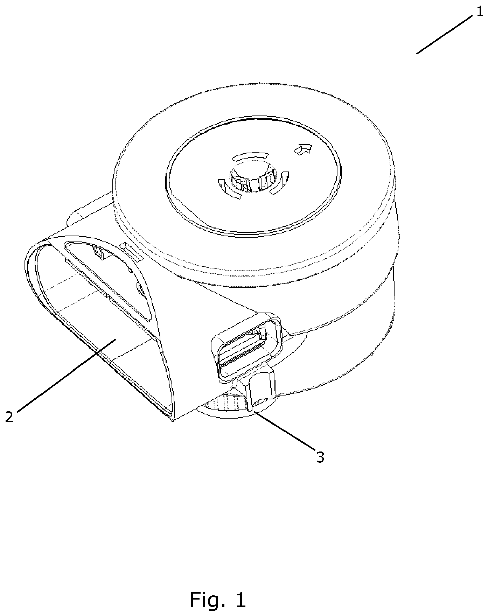

Fig. 1 is a perspective view of a basis module 1 for an actuator according to an embodiment of the invention. The basis module 1 is provided with an interface 2 arranged to receive at least one additional module. In Fig. 1 no additional module is mounted at the interface 2.

The basis module 1 can be connected to a component, such as a valve, to be actuated, via a second interface 3.

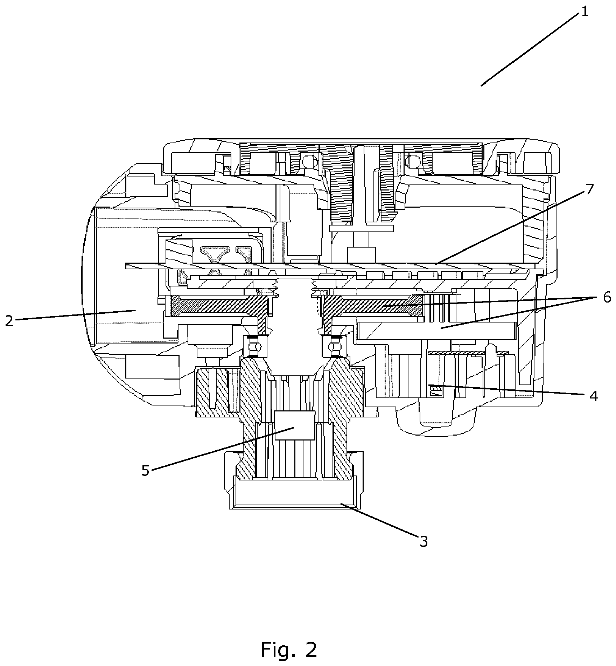

Fig. 2 is a cross sectional view of the basis module 1 of Fig. 1, revealing the interior of the basis module 1. A motor 4 is connected to an actuating part 5, via a gear system 6, in such a manner that rotational movements of the motor 4 are transformed into translational movements of the actuating part 5. A printed circuit board 7 provides electronics for controlling the actuator.

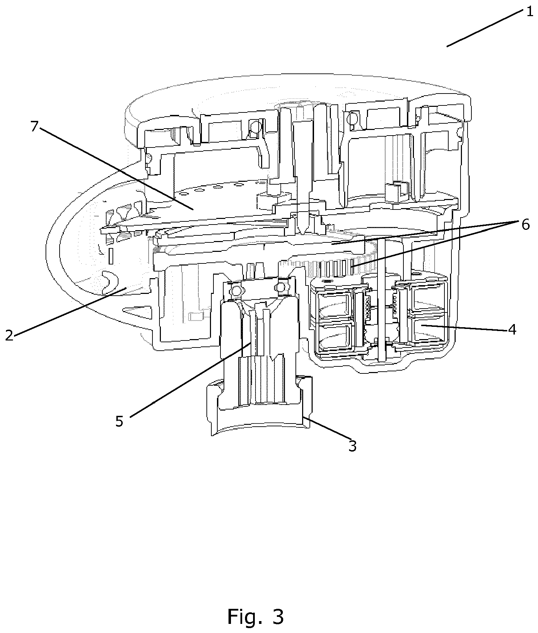

Fig. 3 is a cross sectional and perspective view of the basis module 1 of Figs. 1 and 2, allowing further details of the interior of the basis module 1 to be seen.

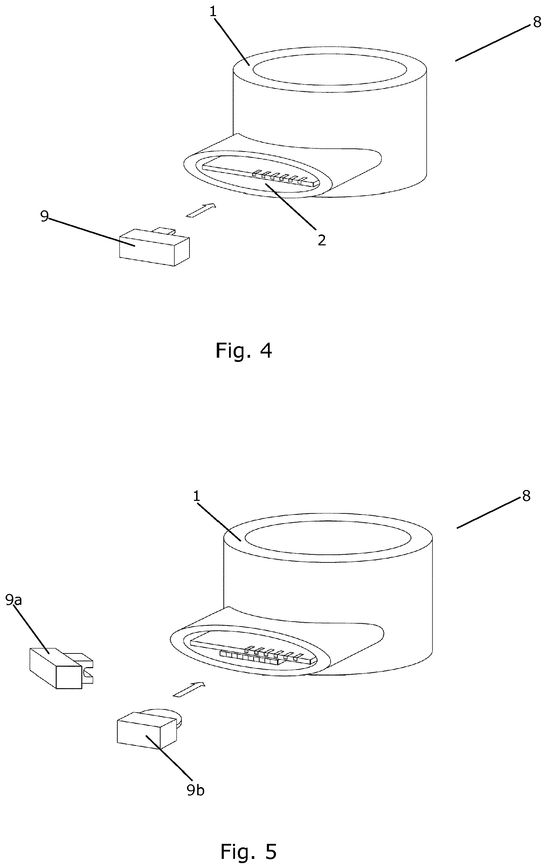

Figs. 4 and 5 are perspective views of an actuator 8 according to a first embodiment of the invention. The actuator 8 comprises a basis module 1 and an additional module in the form of an energy storage module 9. The energy storage module 9 can be mounted on the basis module 1 at the interface 2, as illustrated by the arrows, thereby forming the actuator 8. As described above, the energy storage module 9 ensures that the actuated part can be moved to a predefined position, by means of energy stored in the energy storage module 9, in the case of a power interruption. The predefined position may, e.g., be an end position of the actuated part, e.g. defining a fully open or a fully closed state of a valve being actuated by the actuator 8. The basis module 1 may, e.g., be of the kind illustrated in Figs. 1-3.

In Fig. 4 the energy storage module 9 is in the form of a rechargeable battery pack. The battery pack is charged during normal operation of the actuator 8. In the case of a power interruption, the battery pack is connected to the motor, thereby allowing the motor to move the actuating part to the predefined position.

In Fig. 5 two different kinds of energy storage modules 9 are shown. One of the energy storage modules 9a is a rechargeable battery pack as described above with reference to Fig. 4. The other energy storage module 9b comprises a mechanical biasing means, such as a spring. Mechanical energy is stored in the spring, and in the case of a power interruption, the mechanical energy is released in such a manner that the actuating part is moved to the predefined position. Fig. 5 illustrates that the two energy storage modules 9a, 9b are interchangeable, and can be selected in accordance with the circumstances.

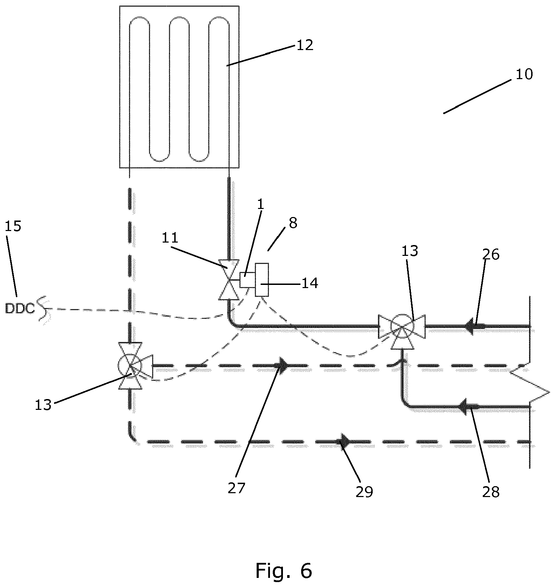

Fig. 6 is a diagram of a cooling and heating system 10 comprising a valve 11 being actuated by means of an actuator 8 according to a second embodiment of the invention. The cooling and heating system 10 further comprises a heat exchanger 12 and two three way valves 13.

The actuator 8 comprises a basis module 1 and an additional module in the form of a control module 14 mounted at the interface of the basis module 1. The control module 14 is connected to each of the three way valves 13, and thereby the actuator 8 is capable of controlling the two three way valves 13. The basis module 1 is further connected to a central control unit 15 in the form of a DDC, e.g. in order to receive control signals from the central control unit 15.

The system 10 of Fig. 6 is of a kind which can be in a cooling mode, where cooling is provided via the heat exchanger 12, or in a heating mode, where heating is provided via the heat exchanger 12. The system 10 can be switched between the cooling mode and the heating mode by appropriately controlling the valves 11, 13 of the system 10. The system 10 may be operated in the following manner.

In the case that it is desired to operate the system 10 in the cooling mode, the central control unit 15 sends a control signal indicating this to the actuator 8. In response the actuator 8 closes the valve 11 and sends control signals to each of the three way valves 13 in order to close these as well, in such a manner that it is ensured that any heating fluid which may be present in the heat exchanger 12 is removed.

Then the actuator 8 sends a control signal to each of the three way valves 13, instructing them to open a passage which provides cooling fluid. Finally, the actuator 8 actuates the valve 11 in such a manner that the flow of cooling fluid to the heat exchanger 12 is controlled in an appropriate manner. The fluid flow through the system 10 in this case is illustrated by arrows 26 and 27.

In the case that it is desired to operate the system 10 in the heating mode, a similar procedure is performed. Thus, the central control unit 15 sends a control signal to the actuator 8, indicating that the system 10 shall be operated in the heating mode. In response thereto the actuator 8 controls the valve 11 and sends control signals to the three way valves 13 in order to cause the three way valves 13 to open a passage which provides heating fluid, similarly to the procedure described above. Finally, the actuator 8 actuates the valve 11 in such a manner that the flow of heating fluid to the heat exchanger 12 is controlled in an appropriate manner. The fluid flow through the system 10 in this case is illustrated by arrows 28 and 29.

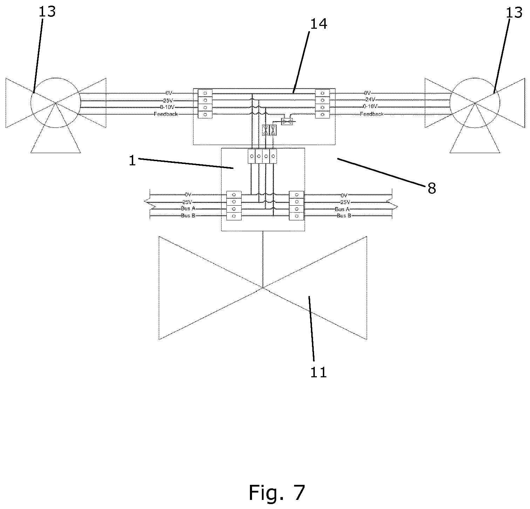

Fig. 7 illustrates the actuator 8 according to the second embodiment of the invention. It can be seen in Fig. 7 that the actuator 8 comprises a basis module 1 and a control module 14. The basis module 1 and the control module 14 are interconnected, but are otherwise separate parts. It is clear from Fig. 7 that the basis module 1 is connected to the central control unit, and that the control module 14 is connected to each of the three way valves 13. In the embodiment shown in Fig. 7, all of the control electronics required in order to control the three way valves 13 are arranged in the basis module 1. Thereby the control module 14 only provides the connections to the three way valves 13, allowing the control electronics of the basis module 1 to communicate with the three way valves 13. As an alternative, at least some of the required control electronics could be arranged in the control module 14.

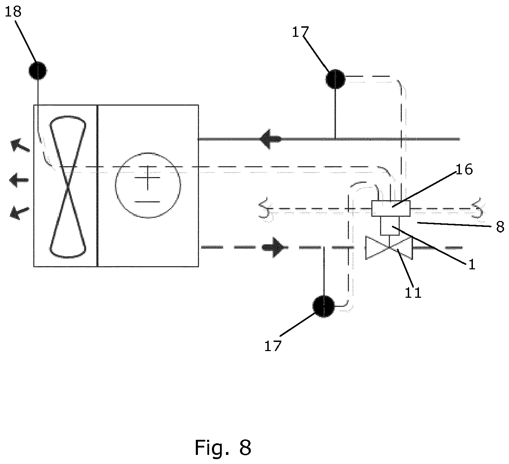

Fig. 8 is a diagrammatic view of a system comprising a valve 11 being actuated by means of an actuator 8 according to a third embodiment of the invention. The actuator 8 comprises a basis module 1 and an additional module in the form of a sensor connection module 16. The sensor connection module 16 is capable of feeding an output signal of one or more sensors to the actuator 8. Such sensor signals may, e.g., be required in order to perform appropriate actuation.

Two temperature sensors 17 are arranged in a flow path in such a manner that they measure an inlet temperature and an outlet temperature of a fluid flowing in the flow path. The valve 11 is also arranged in the flow path. The output signals of the temperature sensors 17 are fed to the actuator 8, via the sensor connection module 16. As described above, this makes the actuator 8 capable of calculating an energy flow through the valve 11, if the valve 11 is of a kind where the fluid flow through the valve 11 is independent of the differential pressure across the valve 11. This is in particular advantageous in large heating and/or cooling systems which are managed at a building level.

Furthermore, an additional temperature sensor 18, which measures an air temperature, is arranged in an air flow through a fan coil of the system. The output signal of the additional temperature sensor 18 is also fed to the actuator 8, via the sensor connection module 16.

The actuator 8 may further be adapted to communicate with a central control unit, in order to provide sensor signals and/or processed sensor signals to the central control unit. This communication may take place via the basis module 1 or via the sensor connection module 16, and it may take place via a wired connection or via a wireless connection, such as a WiFi connection.

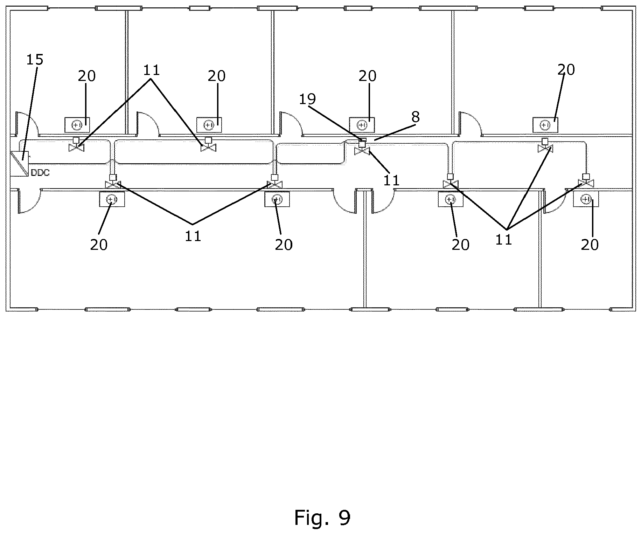

Fig. 9 is a diagrammatic view of a system comprising a valve 11 being actuated by means of an actuator 8 according to a fourth embodiment of the invention. The actuator 8 comprises a basis module 1 and an additional module in the form of a cable connector module 19. The cable connector module 19 comprises cable connectors for connecting the actuator 8 directly to a power supply.

The valve 11 is arranged to control a supply of cooling or heating fluid to a cooling and heating unit 20 arranged inside a room. The cooling and heating unit 20 forms part of a cooling and heating system comprising eight cooling and heating units 20, each arranged in a separate room. The supply of cooling or heating fluid to each of the cooling and heating units 20 is controlled by means of a valve 11.

The cooling and heating units 20 are connected to a common Daisy chain, which is also connected to a central control unit 15. However, the number of cooling and heating units 20 is so high that the resistance in the Daisy chain is too high to ensure a proper power supply to the cooling and heating units 20 arranged furthest away from the central control unit 20. In order to ensure a sufficient power supply to all of the cooling and heating units 20, the power signal is boosted by means of the cable connector module 19 and its connection to the power supply.

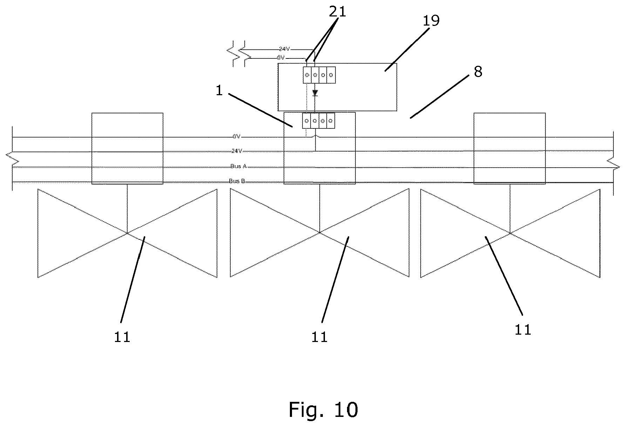

Fig. 10 illustrates the actuator 8 according to the fourth embodiment of the invention. It can be seen that the actuator 8 comprises a basis module 1 and a cable connector module 19. The basis module 1 and the cable connector module 19 are connected to each other, but otherwise they form separate parts of the actuator 8. The cable connectors 21 of the cable connector module 19 connect the cable connector module 19 directly to a power supply.

The basis module 1 is connected to actuators of two neighbouring cooling and heating units. The actuators of the neighbouring cooling and heating units are of a kind according to the invention in the sense that they comprise a basis module 1 which is essentially identical to the basis module 1 of the actuator 8 according to the fourth embodiment of the invention. However, the actuators of the neighbouring cooling and heating units do not have an additional module mounted at the interface of the basis module 1.

By means of the power supply, the power signal to the neighbouring cooling and heating units is boosted, via the cable connector module 19.

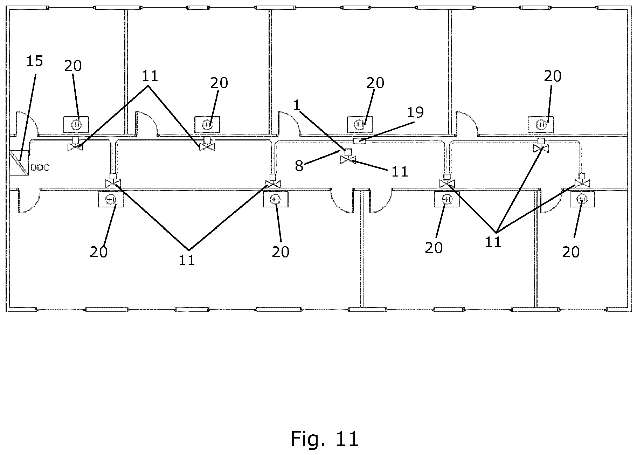

Fig. 11 is a diagrammatic view of a system comprising a valve 11 being actuated by means of an actuator 8 according to a fifth embodiment of the invention. The embodiment illustrated in Fig. 11 is very similar to the embodiment illustrated in Fig. 9, in the sense that the system comprises eight interconnected cooling and heating units 20, each arranged in a separate room, and each having a fluid flow to the cooling and heating unit 20 controlled by means of a valve 11.

The actuator 8 according to the fifth embodiment of the invention comprises a basis module 1 and a cable connector module 19. The cable connector module 19 comprises cable connectors allowing the actuator 8 to communicate with the other cooling and heating units 20 of the system. Thereby the basis module 1 and the cable connector module 19 can be separated, without affecting the communication between the central control unit 15 and the other cooling and heating units 20. This allows the basis module 1 to be replaced or repaired, without affecting the cooling and heating function of all of the other rooms.

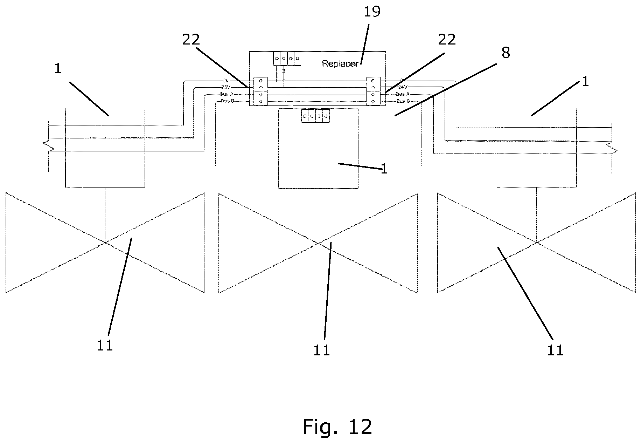

Fig. 12 illustrates the actuator 8 according to the fifth embodiment of the invention. It is clear from Fig. 12 that the actuator 8 is connected to the actuators of the neighbouring cooling and heating units via the cable connectors 22 of the cable connector module 19.

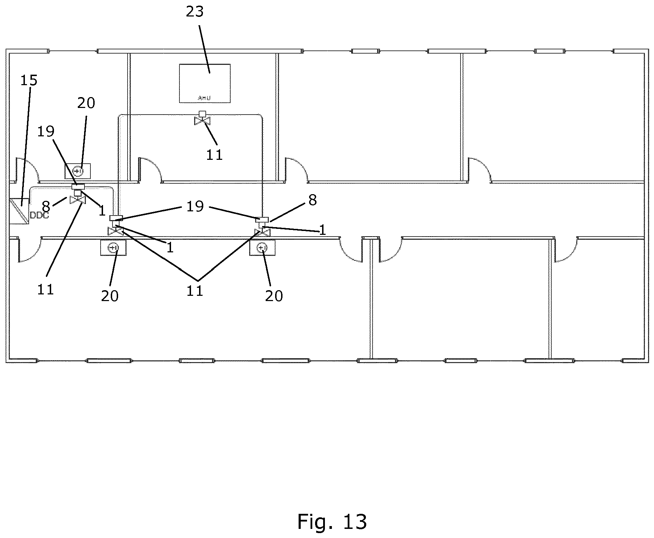

Fig. 13 is a diagrammatic view of a system comprising three valves 11, each being actuated by means of an actuator 8 according to a sixth embodiment of the invention. The embodiment illustrated in Fig. 13 is very similar to the embodiments illustrated in Figs. 9 and 11, in the sense that the system comprises a number of interconnected cooling and heating units 20, each arranged in a separate room, and each having a fluid flow to the cooling and heating unit 20 controlled by means of a valve 11. Three of the valves 11 are operated by means of an actuator 8 according to the sixth embodiment of the invention. The actuator 8 comprises a basis module 1 and a cable connector module 19, which is essentially identical to the cable connector module 19 described above with reference to Figs. 11 and 12.

A fourth valve 11 is arranged to control a supply of cooling or heating fluid to a critical component 23. The critical component 23 is of a kind which is essential for the operation of the system. It is therefore very important that the communication between the critical component 23 and the central control unit 15 is not interrupted in the case that one of the cooling or heating units 20 fails, breaks down or undergoes maintenance. The cable connections of the cable connector modules 19 ensure that the communication between the central control unit 15 and the critical component 23 is maintained, even if one of the other units is in-operational.

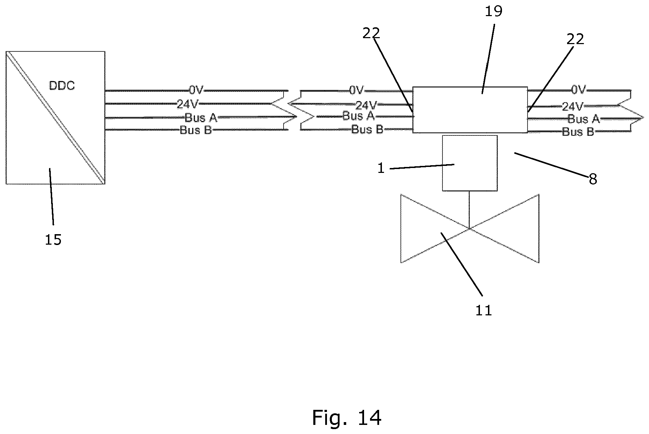

Fig. 14 illustrates the actuator 8 according to the sixth embodiment of the invention, and how the cable connectors 22 provide the communication to the central control unit 15.

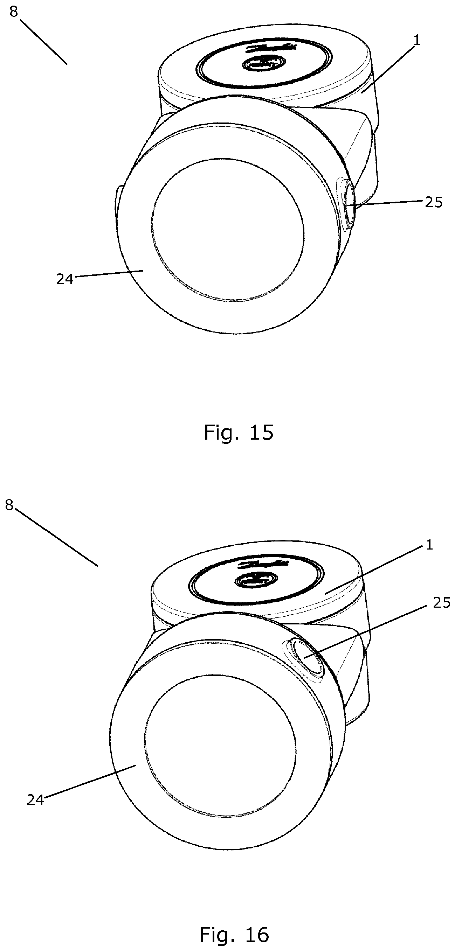

Figs. 15 and 16 are perspective views of an actuator according to a seventh embodiment of the invention. The actuator 8 comprises a basis module 1 having and additional module in the form of a conduit connector module 24 mounted at the interface. The conduit connector module 24 comprises a cable inlet 25 adapted to receive an in-going cable. The cable conduit connector module 24 can be rotated relative to the basis module 1, thereby moving the angular position of the cable inlet 25 relative to the basis module 1. Thereby the cable inlet 25 can be moved to a position which matches a position of an in-going cable.

In Figs. 15 and 16 the cable inlet 25 is shown in two different positions.

## Claims

1. An actuator (8) being arranged for controlling a valve (11, 13), the actuator (8) comprising:
- a basis module (1) comprising a motor (4) arranged to drive an actuating part (5) of the actuator (8),
**characterized in that** the actuator (8) further comprises:
- an interface (2), formed on the basis module (1), said interface (2) being arranged to receive at least one additional module (9, 14, 16, 19, 24), selected among two or more kinds of additional modules (9, 14, 16, 19, 24), where each additional module (9, 14, 16, 19, 24) is arranged to cooperate with the basis module (1) to provide additional functionality to the actuator (8), where different kinds of additional modules (9, 14, 16, 19, 24) provide different functionality,
wherein an actuator (8) having an additional module (9, 14, 16, 19, 24) of a given kind mounted at the interface (2) is capable of performing the functionality provided by additional modules (9, 14, 16, 19, 24) of this kind, wherein an additional module (9, 14, 16, 19, 24) of one kind, mounted at the interface (2), can be exchanged by an additional module (9, 14, 16, 19, 24) of another kind, thereby changing the additional functionality provided to the actuator (8), and wherein one of the additional modules is an energy storage module (9), which provides an emergency energy storage for the actuator (8), said emergency energy storage allowing the actuating part (5) to be moved into a predefined position in the case of a power interruption.

2. An actuator (8) according to claim 1, wherein the motor (4) is an electrical motor.

3. An actuator (8) according to claim 1 or 2, wherein the basis module (1) further comprises a gear arrangement (6) for transferring movements of the motor (4) into movements of the actuating part (5).

4. An actuator (8) according to claim 3, wherein the gear arrangement (6) is arranged to transfer a rotational movement of the motor (4) into a translational movement of the actuating part (5).

5. An actuator (8) according to any of the preceding claims, wherein the energy storage module (9a) comprises a rechargeable battery or battery pack.

6. An actuator (8) according to any of claims 1-4, wherein the energy storage module (9b) comprises mechanical biasing means.

7. An actuator (8) according to any of the preceding claims, wherein one of the additional modules is a control module (14), which is capable of providing a connection to one or more further components being external with respect to the actuator (8), and wherein the functionality added to the actuator (8) by the control module (14) is to enable the actuator (8) to control said one or more further components.

8. An actuator (8) according to claim 7, wherein the control module (14) comprises control electronics required for performing at least part of the control of the one or more further components.

9. An actuator (8) according to claim 7 or 8, wherein at least one of the one or more further components is a valve (11, 13).

10. An actuator (8) according to any of the preceding claims, wherein one of the additional modules is a sensor connection module (16), which is capable of feeding an output signal of one or more sensors (17, 18) to the actuator (8).

11. An actuator (8) according claim 10, wherein the sensor connection module (16) is further adapted to communicate sensor signals and/or processed sensor signals to a central control unit (15).

12. An actuator (8) according to any of the preceding claims, wherein one of the additional modules is a cable connector module (19), which comprises cable connectors (22) for connecting the actuator (8) directly to a power supply, and/or cable connectors (22) allowing the actuator (8) to be interconnected with one or more further components.

13. An actuator (8) according to claim 12, wherein at least one of the one or more further components is another actuator (8).

14. An actuator (8) according to claim 12 or 13, wherein at least one of the one or more further components is a central control unit (15).

15. An actuator (8) according to any of claims 12-14, wherein the interconnection to one or more further components is provided by means of a bus connection.

16. An actuator (8) according to any of claims 12-15, wherein the cable connector module (19) allows the actuator (8) to boost a power signal by means of the cable connectors (22) for connecting the actuator (8) directly to a power supply.

17. An actuator (8) according to any of the preceding claims, wherein one of the additional modules is a conduit connector module (24), comprising a cable inlet (25), where a rotational orientation of the cable inlet (25), relative to the basis module (1), can be adjusted to match a position of an in-going cable.

18. An actuator (8) according to any of the preceding claims, wherein the basis module (1) further comprises electronics (7) for controlling the actuator (8).

## Patentansprüche

1. Stellglied (8), das zum Steuern eines Ventils (11, 13) angeordnet ist, wobei das Stellglied (8) Folgendes umfasst:
- ein Basismodul (1), umfassend einen Motor (4), der angeordnet ist, um ein Betätigungsteil (5) des Stellglieds (8) anzutreiben,
**dadurch gekennzeichnet, dass** das Stellglied (8) ferner Folgendes umfasst:
- eine Grenzfläche (2), die am Basismodul (1) ausgebildet ist, wobei die Grenzfläche (2) angeordnet ist, um mindestens ein zusätzliches Modul (9, 14, 16, 19, 24) aufzunehmen, das aus zwei oder mehr Arten von zusätzlichen Modulen (9, 14, 16, 19, 24) ausgewählt ist, wobei jedes zusätzliche Modul (9, 14, 16, 19, 24) angeordnet ist, um mit dem Basismodul (1) zusammenzuwirken, um dem Stellglied (8) zusätzliche Funktionalität bereitzustellen, wobei unterschiedliche Arten von zusätzlichen Modulen (9, 14, 16, 19, 24) unterschiedliche Funktionalität bereitstellen,
wobei ein Stellglied (8), das ein an der Grenzfläche (2) montiertes zusätzliches Modul (9, 14, 16, 19, 24) einer bestimmten Art aufweist, fähig ist, die von zusätzlichen Modulen (9, 14, 16, 19, 24) dieser Art bereitgestellte Funktionalität auszuführen, wobei ein an der Grenzfläche (2) montiertes zusätzliches Modul (9, 14, 16, 19, 24) einer Art durch ein zusätzliches Modul (9, 14, 16, 19, 24) einer anderen Art ersetzt werden kann, wodurch sich die dem Stellglied (8) bereitgestellte zusätzliche Funktionalität ändert, und wobei eines der zusätzlichen Module ein Energiespeichermodul (9) ist, das einen Notfallenergiespeicher für das Stellglied (8) bereitstellt, wobei dieser Notfallenergiespeicher es dem Betätigungsteil (5) ermöglicht, im Fall einer Stromunterbrechung in eine vorab definierte Position bewegt zu werden.

2. Stellglied (8) nach Anspruch 1, wobei der Motor (4) ein Elektromotor ist.

3. Stellglied (8) nach Anspruch 1 oder 2, wobei das Basismodul (1) ferner eine Zahnradbaugruppe (6) zum Überführen von Bewegungen des Motors (4) in Bewegungen des Betätigungsteils (5) umfasst.

4. Stellglied (8) nach Anspruch 3, wobei die Zahnradbaugruppe (6) angeordnet ist, um eine Rotationsbewegung des Motors (4) in eine translatorische Bewegung des Betätigungsteils (5) zu überführen.

5. Stellglied (8) nach einem der vorhergehenden Ansprüche, wobei das Energiespeichermodul (9a) eine wiederaufladbare Batterie oder ein wiederaufladbares Batteriepaket umfasst.

6. Stellglied (8) nach einem der Ansprüche 1-4, wobei das Energiespeichermodul (9b) mechanische Vorspannmittel umfasst.

7. Stellglied (8) nach einem der vorhergehenden Ansprüche, wobei eines der zusätzlichen Module ein Steuermodul (14) ist, das fähig ist, eine Verbindung zu einer oder mehreren weiteren Komponenten bereitzustellen, die im Hinblick auf das Stellglied (8) extern sind, und wobei die vom Steuermodul (14) dem Stellglied (8) hinzugefügte Funktionalität darin besteht, das Stellglied (8) zu befähigen, die eine oder mehreren weiteren Komponenten zu steuern.

8. Stellglied (8) nach Anspruch 7, wobei das Steuermodul (14) Steuerelektronik umfasst, die zum Ausführen zumindest eines Teils der Steuerung der einen oder mehreren weiteren Komponenten erforderlich ist.

9. Stellglied (8) nach Anspruch 7 oder 8, wobei mindestens eine der einen oder mehreren weiteren Komponenten ein Ventil (11, 13) ist.

10. Stellglied (8) nach einem der vorhergehenden Ansprüche, wobei eines der zusätzlichen Module ein Sensorverbindungsmodul (16) ist, das fähig ist, ein Ausgabesignal eines oder mehrerer Sensoren (17, 18) zum Stellglied (8) zu leiten.

11. Stellglied (8) nach Anspruch 10, wobei das Sensorverbindungsmodul (16) ferner dazu ausgeführt ist, Sensorsignale und/oder verarbeitete Sensorsignale an eine zentrale Steuereinheit (15) zu übertragen.

12. Stellglied (8) nach einem der vorhergehenden Ansprüche, wobei eines der zusätzlichen Module ein Kabelverbindermodul (19) ist, das Kabelverbinder (22) zum direkten Verbinden des Stellglieds (8) mit einer Stromversorgung und/oder Kabelverbinder (22), die es dem Stellglied (8) ermöglichen, mit einer oder mehreren weiteren Komponenten verbunden zu werden, umfasst.

13. Stellglied (8) nach Anspruch 12, wobei mindestens eine der einen oder mehreren weiteren Komponenten ein weiteres Stellglied (8) ist.

14. Stellglied (8) nach Anspruch 12 oder 13, wobei mindestens eine der einen oder mehreren weiteren Komponenten eine zentrale Steuereinheit (15) ist.

15. Stellglied (8) nach einem der Ansprüche 12-14, wobei die Verbindung mit einer oder mehreren weiteren Komponenten mittels einer Busverbindung bereitgestellt wird.

16. Stellglied (8) nach einem der Ansprüche 12-15, wobei das Kabelverbindermodul (19) es dem Stellglied (8) ermöglicht, ein Stromsignal mittels der Kabelverbinder (22) zum direkten Verbinden des Stellglieds (8) mit einer Stromversorgung zu verstärken.

17. Stellglied (8) nach einem der vorhergehenden Ansprüche, wobei eines der zusätzlichen Module ein Leitungsverbindermodul (24) ist, das einen Kabeleingang (25) umfasst, wobei eine Rotationsausrichtung des Kabeleingangs (25) relativ zum Basismodul (1) eingestellt werden kann, um zu einer Position eines hineingehenden Kabels zu passen.

18. Stellglied (8) nach einem der vorhergehenden Ansprüche, wobei das Basismodul (1) ferner Elektronik (7) zum Steuern des Stellglieds (8) umfasst.

## Revendications

1. Actionneur (8) agencé pour commander une soupape (11, 13), l'actionneur (8) comprenant :
- un module de base (1) comprenant un moteur (4) agencé pour entraîner une partie d'actionnement (5) de l'actionneur (8),
**caractérisé en ce que** l'actionneur (8) comprend en outre :
- une interface (2), réalisée sur le module de base (1), ladite interface (2) étant agencée pour recevoir au moins un module supplémentaire (9, 14, 16, 19, 24) sélectionné parmi deux ou plusieurs types de modules (9, 14, 16, 19, 24), où chaque module supplémentaire (9, 14, 16, 19, 24) est agencé pour coopérer avec le module de base (1) pour fournir une fonctionnalité supplémentaire à l'actionneur (8), où différents types de modules supplémentaires (9, 14, 16, 19, 24) offrent des fonctionnalités différentes,
dans lequel un actionneur (8) ayant un module supplémentaire (9, 14, 16, 19, 24) d'un type donné monté sur l'interface (2) est capable d'exécuter la fonctionnalité fournie par des modules supplémentaires (9, 14, 16, 19, 24) de ce type, dans lequel un module supplémentaire (9, 14, 16, 19, 24) d'un type, monté sur l'interface (2), peut être échangé par un module supplémentaire (9, 14, 16, 19, 24) d'un autre type, en changeant la fonctionnalité supplémentaire fournie à l'actionneur (8), et dans lequel l'un des modules supplémentaires est un module de stockage d'énergie (9) qui fournit un stockage d'énergie d'urgence à l'actionneur (8), ledit stockage d'énergie d'urgence permettant de déplacer la partie d'actionnement (5) dans une position prédéfinie en cas de coupure de courant.

2. Actionneur (8) selon la revendication 1, dans lequel le moteur (4) est un moteur électrique.

3. Actionneur (8) selon l'une des revendications 1 ou 2, dans lequel le module de base (1) comprend en outre un agencement à engrenages (6) pour transformer des mouvements du moteur (4) en mouvements de la partie d'actionnement (5).

4. Actionneur (8) selon la revendication 3, dans lequel l'agencement à engrenages (6) est agencé pour transformer un mouvement de rotation du moteur (4) en un mouvement de translation de la partie d'actionnement (5) .

5. Actionneur (8) selon l'une quelconque des revendications précédentes, dans lequel le module de stockage d'énergie (9a) comprend une batterie ou un bloc de batteries rechargeable.

6. Actionneur (8) selon l'une quelconque des revendications 1 à 4, dans lequel le module de stockage d'énergie (9b) comprend des moyens de pression mécanique.

7. Actionneur (8) selon l'une quelconque des revendications précédentes, dans lequel l'un des modules supplémentaires est un module de commande (14) capable de fournir une connexion à un ou plusieurs composants supplémentaires externes à l'actionneur (8), et dans lequel la fonctionnalité ajoutée à l'actionneur (8) par le module de commande (14) doit permettre à l'actionneur (8) de contrôler ledit ou lesdits composants supplémentaires.

8. Actionneur (8) selon la revendication 7, dans lequel le module de commande (14) comprend une électronique de commande requise pour effectuer au moins une partie de la commande du ou des composants supplémentaires.

9. Actionneur (8) selon la revendication 7 ou 8, dans lequel au moins l'un du ou des composants supplémentaires est une soupape (11, 13).

10. Actionneur (8) selon l'une quelconque des revendications précédentes, dans lequel l'un des modules supplémentaires est un module de connexion de capteur (16) capable de fournir un signal de sortie d'un ou plusieurs capteurs (17, 18) à l'actionneur (8).

11. Actionneur (8) selon la revendication 10, dans lequel le module de connexion de capteur (16) est en outre adapté pour communiquer des signaux de capteur et/ou des signaux de capteur traités à une unité de commande centrale (15).

12. Actionneur (8) selon l'une quelconque des revendications précédentes, dans lequel l'un des modules supplémentaires est un module de connexion de câbles (19), qui comprend des connecteurs de câbles (22) pour connecter l'actionneur (8) directement à une alimentation et/ou des connecteurs de câbles (22) permettant à l'actionneur (8) d'être interconnecté à un ou plusieurs composants supplémentaires.

13. Actionneur (8) selon la revendication 12, dans lequel au moins l'un du ou des composants supplémentaires est un autre actionneur (8).

14. Actionneur (8) selon l'une des revendications 12 ou 13, dans lequel au moins l'un du ou des composants supplémentaires est une unité de commande centrale (15) .

15. Actionneur (8) selon l'une quelconque des revendications 12 à 14, dans lequel l'interconnexion à un ou plusieurs composants supplémentaires est assurée au moyen d'une connexion à bus.

16. Actionneur (8) selon l'une quelconque des revendications 12 à 15, dans lequel le module de connexion de câbles (19) permet à l'actionneur (8) d'augmenter un signal de puissance au moyen des connecteurs de câbles (22) pour connecter l'actionneur (8) directement à une alimentation électrique.

17. Actionneur (8) selon l'une quelconque des revendications précédentes, dans lequel l'un des modules supplémentaires est un module de connexion de conduit (24), comprenant une entrée de câble (25), une orientation de rotation de l'entrée de câble (25) par rapport au module de base (1) pouvant être réglée de façon à correspondre à une position d'un câble entrant.

18. Actionneur (8) selon l'une quelconque des revendications précédentes, dans lequel le module de base (1) comprend en outre une électronique (7) pour commander l'actionneur (8).
